Europäisches Patentamt

European Patent Office

Office européen des brevets

(19)

(11) **EP 0 846 137 B1**

(12) **EUROPÄISCHE PATENTSCHRIFT**

(45) Veröffentlichungstag und Bekanntmachung des Hinweises auf die Patenterteilung:
**15.05.2002 Patentblatt 2002/20**

(21) Anmeldenummer: **97929254.7**

(22) Anmeldetag: **21.06.1997**

(51) Int Cl.⁷: **C08G 59/40**, C09D 163/00

(86) Internationale Anmeldenummer:
**PCT/EP97/03268**

(87) Internationale Veröffentlichungsnummer:
**WO 97/49749 (31.12.1997 Gazette 1997/57)**

(54) **AMINOURETHAN-HÄRTER, ÜBERZUGSMITTEL AUF EPOXIDBASIS UND DEREN VERWENDUNG**

AMINOURETHANE ACCELERATORS, EPOXY-BASED COATING MATERIALS CONTAINING THEM AND THE USE OF SUCH COATING MATERIALS

DURCISSEURS D'AMINO-URETHANE, AGENTS DE REVETEMENT A BASE D'EPOXYDE ET LEUR UTILISATION

(84) Benannte Vertragsstaaten:
**AT BE CH DE DK ES FR GB GR IE IT LI NL PT SE**

(30) Priorität: **25.06.1996 DE 19625345**

(43) Veröffentlichungstag der Anmeldung:
**10.06.1998 Patentblatt 1998/24**

(73) Patentinhaber: **E.I. DU PONT DE NEMOURS AND COMPANY**
**Wilmington Delaware 19898 (US)**

(72) Erfinder:
• COLLONG, Wilfried
  **D-42929 Wermelskirchen (DE)**
• **LENHARD, Werner**
  **D-42109 Wuppertal (DE)**
• **BESOLD, Robert**
  **D-90482 Nürnberg (DE)**
• **NEUMANN, Uwe**
  **D-53757 Sankt Augustin (DE)**

(74) Vertreter: **Gille Hrabal Struck Neidlein Prop Roos Patentanwälte**
**Brucknerstrasse 20**
**40593 Düsseldorf (DE)**

(56) Entgegenhaltungen:
**EP-A- 0 000 605      EP-A- 0 535 794**
**DE-A- 4 310 198      DE-A- 4 344 510**
**JP-A- 3 275 709      US-A- 4 122 069**

**Beschreibung**

Die Erfindung betrifft Epoxid-Aminourethan-Addukte und Überzugsmittel auf Basis wäßriger Epoxidsysteme, welche die Epoxid-Aminourethan-Addukte als Härter enthalten. Die Erfindung betrifft auch die Verwendung der Epoxid-Aminourethan-Addukte zur Mehrschichtlackierung, insbesondere auf dem Gebiet der Fahrzeug- und Fahrzeugteilelakkierung.

Aufgrund immer strenger werdender Umweltschutzauflagen gewinnen wäßrige Systeme zur Beschichtung von Gegenständen zunehmend an Bedeutung. Sie müssen sich in ihren Eigenschaften an konventionellen, d.h. lösemittelhaltigen Systemen messen lassen. Wasserverdünnbare Epoxidharzsysteme haben zunehmend unter den kalthärtenden "Wasserlacken" an Bedeutung gewonnen. Diese zweikomponentigen (2K) Systeme weisen hervorragende Eigenschaften auf. Hervorzuheben sind folgende positive Eigenschaften: kein oder nur geringer Lösemittelanteil, nicht feuergefährlich, keine oder nur geringe Geruchsbelästigung, leichte Verarbeitbarkeit, geringe Empfindlichkeit gegenüber feuchten Untergründen, gute Trocknung und schnelle Durchhärtung, sehr gute Haftung auf den meisten Substraten, sehr gute Zwischenschichthaftung, guter Korrosionsschutz bei Metallen und leichte Reinigung der Arbeitsgeräte direkt nach Gebrauch.

So zeigen insbesondere nicht-ionisch dispergierte Epoxidharzsysteme, wie sie in der DE-A-36 43 751 beschrieben sind, mit wäßrigen Härtern auf Amin-Basis, wie sie in der EP-A-0 000 605 genannt sind, viele dieser hervorragenden Eigenschaften, so daß sie als Beschichtungsmittel vielseitige Verwendung finden. Nachteilig an diesen Systemen ist allerdings, daß sie bei bestimmten Lackanwendungen keine störungsfreien Oberflächen erzeugen.

In der EP-A-0 387 418 werden Härtungsmittel für wäßrige Epoxidsysteme beschrieben, welche hergestellt werden durch Umsetzung von Polyalkylenpolyetherpolyaminen mit Polyepoxidverbindungen und Umsetzung des entstehenden epoxidfunktionellen Produktes mit primären oder sekundären Polyaminen zu einem aminfunktionellen Endprodukt. Diese Systeme sind insbesondere geeignet zur Herstellung von Dichtmassen, Klebstoffen, Formteilen und Laminaten. Bei einer Anwendung als Fülleroder Grundierungsschicht in einer Mehrschichtlackierung zeigen sie den Nachteil einer ungenügenden Schleifbarkeit. Durch die ausgeprägte Thermoplastizität setzt sich beim Schleifen das Schleifpapier nach kurzer Zeit zu und die Oberfläche wird geschädigt. Außerdem wird eine unbefriedigende Ablaufsicherheit mit diesen Überzugsmitteln erzielt.

In der DE-A-43 44 510 werden wäßrige Überzugsmittel mit Bindemitteln auf Epoxidbasis und Härtern auf der Basis von Aminourethanen beschrieben. Aus den Überzugsmitteln erstellte Überzüge sind zwar schleifbar, es hat sich jedoch gezeigt, daß die Oberflächenqualität unzureichend ist. Die Oberflächengüte kann zwar durch Zusatz wasserverdünnbarer Polyurethanharze verbessert werden, das geschieht jedoch wieder auf Kosten der Schleifbarkeit.

Aufgabe der Erfindung war daher die Bereitstellung von Aminhärtern für wäßrige Epoxidsysteme, welche den daraus hergestellten Überzugsmitteln eine ausreichende Verarbeitungszeit und hohe Ablaufsicherheit verleihen und welche Überzüge mit störungsfreien Oberflächen und guter Schleifbarkeit im trockenen und nassen Zustand ergeben.

Es hat sich gezeigt, daß diese Aufgabe gelöst wird durch aminfunktionelle Epoxid-Aminourethan-Addukte, im folgenden als Aminourethan-Härter bezeichnet. Einen Gegenstand der Erfindung betreffen daher Aminourethan-Härter, die für wäßrige Überzugsmittel auf Epoxidbasis geeignet sind und erhältlich sind durch Umsetzung von

A) einem oder mehreren Aminourethanen, die erhältlich sind durch Umsetzung von

a) Verbindungen mit mindestens einer 2-Oxo-1,3-dioxolan-Gruppe und/oder 2-Oxo-1,3-dioxan-Gruppe, im folgenden als cyclische Carbonatgruppe bezeichnet,
mit
b) einem oder mehreren Aminen mit mindestens einer primären Aminogruppe,
wobei das Verhältnis der Anzahl der cyclischen Carbonatgruppen zu der Anzahl der primären Aminogruppen 1 : 10 bis 1 : 1,1 beträgt,
mit

B) einer oder mehreren wasserverdünnbaren Epoxidverbindungen, die erhältlich sind durch Umsetzung von

c) einem oder mehreren Polyalkylenpolyethern mit mindestens einer primären und/oder sekundären $\alpha$-ständigen Aminogruppe und einer $\omega$-ständigen Alkylether- oder Arylethergruppe und/oder einem oder mehreren Polyalkylenpolyethern mit zwei primären und/oder sekundären $\alpha,\omega$-ständigen Aminogruppen, jeweils mit einer gewichtsmittleren Molmasse (Mw) von 200 bis 20000
mit
d) einer oder mehreren Epoxidverbindungen mit mindestens zwei Epoxidgruppen pro Molekül und einem Epoxidäquivalentgewicht von 100 bis 2000, wobei das Verhältnis der Anzahl der primären und/oder sekundären Aminogruppen der Komponente c) zu den Epoxidgruppen der Komponente d) 1 : 2 bis 1 : 20 beträgt und das Epoxidäquivalentgewicht der aus c) und d) erhaltenen Kondensationsprodukte zwischen 150 und 8000 liegt, und

C) gegebenenfalls einem oder mehreren von A) unterschiedlichen Aminen mit mindestens einer primären Aminogruppe.

Die in der Komponente A)a) eingesetzten cyclische Carbonatgruppen enthaltenden Verbindungen sind insbesondere solche, die eine, vorzugsweise zwei oder mehrere 2-Oxo-1,3-dioxolan- oder 2-Oxo-1,3-dioxan-Gruppen enthalten, wobei diese bevorzugt endständig sind. Bei der Komponente A)b) handelt es sich um Amine, welche mindestens eine primäre, vorzugsweise mehrere primäre und gegebenenfalls noch sekundäre und tertiäre Aminogruppen enthalten. Bei den Polyalkylenpolyethern der Komponente B)c) handelt es sich um solche mit alpha-endständiger sekundärer oder primärer Aminogruppe und omega-endständiger Alkyletheroder Arylethergruppe; die Polyalkylenpolyether mit mindestens zwei primären und/oder sekundären Aminogruppen sind solche mit alpha,omegaendständigen primären und/oder sekundären Aminogruppen. Bei der Herstellung der Komponente B) beträgt das Verhältnis der Anzahl der primären und sekundären Aminogruppen der Komponente c) zu der Anzahl der Epoxid-Gruppen der Komponente d) 1:2 bis 1:20, vorzugsweise 1:4 bis 1:8; das Epoxidäquivalentgewicht (Molmasse dividiert durch die Anzahl der vorhandenen Epoxidgruppen) der Komponente B) liegt bei 150 bis 8000, vorzugsweise bei 250 bis 1000.

Die Verbindungen (A) können für sich allein oder aber bevorzugt in Kombination mit üblichen Polyaminen (C) an hydrophile Epoxidharze (B) addiert und in dieser Form als Härterkomponente für wäßrige Epoxidharzsysteme eingesetzt werden. Überraschenderweise werden dabei die vorstehend genannten erforderlichen Eigenschaften wie verbesserte Oberflächenqualität, Ablaufsicherheit und gute Schleifbarkeit erreicht, ohne daß die bisherigen guten Eigenschaften der wäßrigen Zweikomponenten (2K)-Epoxsysteme beeinträchtigt werden.

Zur Herstellung der Aminourethane (A) können als Komponente (a) die üblichen cyclischen Carbonate eingesetzt werden, welche durch Umsetzung von Kohlendioxid mit Epoxidverbindungen nach bekannter Art und Weise (siehe z.B. WO-A-84/03701, DE-A-35 29 263 und DE-A-36 00 602) herstellbar sind. Vorzugsweise handelt es sich bei diesen Epoxidverbindungen um Polyglycidylether auf Basis von mehrwertigen, vorzugsweise zweiwertigen Alkoholen, Phenolen, Hydrierungsprodukten dieser Phenole und/oder von Novolaken (Umsetzungsprodukte von ein- oder mehrwertigen Phenolen mit Aldehyden, insbesondere Formaldehyd in Gegenwart saurer Katalysatoren). Die Epoxidäquivalentgewichte dieser Epoxidverbindungen liegen vorzugsweise zwischen 100 und 2000, insbesondere zwischen 100 und 350. Das Epoxidäquivalentgewicht ist die Molmasse dividiert durch die Anzahl der Epoxidgruppen.

Beispiele für geeignete Epoxidverbindungen sind die in dem Handbuch "Epoxidverbindungen und Epoxidharze" von A.M. Paquin, Springer Verlag, Berlin 1958, Kapitel IV und in Lee, Nevill, "Handbook of Epoxy Resins", Mc Graw-Hill Book Co., 1967, Chapter 2 beschriebenen. Die Epoxidverbindungen können einzeln oder im Gemisch eingesetzt werden.

Als Komponente (a) können weiterhin die üblichen cyclischen Carbonate eingesetzt werden, welche durch Umsetzung von Kohlensäureestern, wie z.B. Dimethylcarbonat, Diethylcarbonat, Diphenylcarbonat, Ethylencarbonat oder Propylencarbonat mit Polyolen erhalten werden, wobei die Polyole mindestens vier Hydroxylgruppen tragen, von denen je zwei mit Kohlensäureestern in einer Umesterung zu cyclischen Fünfringoder Sechsring-Carbonaten reagieren. Als mehrwertige Polyole sind beispielsweise zu nennen: Diglycerin, Triglycerin, Polyglycerin, Zuckeralkohole (z. B. Xylit, Mannit, Erythrit), Di- und Trimethylolpropan, Di- und Trimethylolethan, Pentaerythrit und Dipentaerythrit. Diglycerin ist hierbei besonders bevorzugt.

Die Herstellung der cyclischen Carbonate aus den Polyolen geschieht in dem Fachmann geläufiger Weise, insbesondere durch Umsetzung der Polyole mit den Kohlensäureestern im stöchiometrischen Verhältnis 1,0 : 1,0 bis 1,0 : 10,0 (Verhältnis von 1,2- oder 1,3-Glykolgruppen zu Carbonatgruppen), insbesondere unter Katalyse. Als Katalysatoren kommen insbesondere basische Katalysatoren wie z.B. Carbonate, Bicarbonate, Alkoholate, Carboxylate, Hydroxide oder Oxide der Alkali- und Erdalkalimetalle in Frage, aber auch übliche Lewis-Säuren, wie z.B. organische Verbindungen des zwei- oder vierwertigen Zinns oder Titans, z.B. Zinn-(II)-octoat, Zinn-(II)-laureat, Dibutylzinnoxid oder Titantetrabutylat. Die Katalysatoren können beispielsweise in einer Menge von 0,01 bis 1,0 Gew.-%, bezogen auf Polyol und Kohlensäureester zugesetzt werden.

Bei der Herstellung der Aminourethane (A) können als Amin-Komponente (b) Amine, vorzugsweise Polyamine eingesetzt werden, welche zur Reaktion mit den Carbonatgruppen von (a) befähigte primäre Aminogruppen enthalten. Es kann sich dabei beispielsweise um Polyamine, Amin-Epoxid-Addukte und/oder modifizierte Derivate hiervon handeln.

Als Beispiele für Polyamine sind zu nennen Polyalkylenamine, wie Diethylentriamin, Triethylentetramin, Tetraethylenpentamin, Pentaethylenhexamin, Propylendiamin, Dipropylentriamin, ferner 2,2,4-und/oder 2,4,4-Trimethylhexamethylendiamin, Bis-(3-aminopropyl)-amin, 1,4-Bis-(3'-aminopropyl)-piperazin, N,N-Bis(3-aminopropyl)ethyldiamin, Neopentandiamin, 2-Methyl-1,5-pentandiamin, 1,3-Diaminopentan, Hexamethylendiamin, sowie cycloaliphatische Amine wie 1,2- bzw. 1,3-Diaminocyclohexan, 1,4-Diamino-3,6-diethylcyclohexan, 1,2-Diamino-4-ethylcyclohexan, 1,4-Diamino-3,6-diethylcyclohexan, 1-Cyclohexyl-3,4-diaminocyclohexan, Isophorondiamin und Umsetzungsprodukte davon, 4,4'-Diaminodicyclohexylmethan und -propan, 2,2-Bis-(4-aminocyclohexyl)-methan und -propan, 3,3'-Dimethyl-4,4'-diaminodicyclohexylmethan, 3-Amino-1-cyclohexylaminopropan, 1,3- und 1,4-Bis(aminomethyl)-cyclohexan.

Geeignet sind auch araliphatische Amine, insbesondere solche, bei denen aliphatische Aminogruppen vorhanden sind, z.B. meta- und para-Xylylendiamin.

Als Amin-Epoxid-Addukte kommen beispielsweise Umsetzungsprodukte von Polyaminen wie z.B. Ethylendiamin, Propylendiamin, Hexamethylendiamin, 2,2,4- und 2,4,4-Trimethylhexamethylendiamin, meta-Xylylendiamin und/oder Bis-(aminomethyl)-cyclohexan mit endständigen Mono- oder Polyepoxiden, wie z.B. Propylenoxid, Hexenoxid, Cyclohexenoxid, oder mit Glycidylethern wie Phenylglycidylether, tert.-Butylglycidylether, Ethylhexylglycidylether, Butylglycidylether oder mit Glycidylestern wie beispielsweise dem Glycidylester der Versaticsäure oder den zuvor genannten Polyglycidylethern und -estern in Betracht.

Die genannten Amine können allein oder als Gemische verwendet werden. Bevorzugt erfolgt ihre Auswahl so, daß sie mindestens eine, vorzugsweise jedoch mehr als eine freie primäre Aminogruppe enthalten.

Die Umsetzung der Komponenten (a) und (b) erfolgt im allgemeinen in den erforderlichen stöchiometrischen Verhältnissen nach üblichen Methoden, z.B. bei erhöhten Temperaturen, gegebenenfalls unter Verwendung inerter Lösemittel. Die Umsetzung in Gegenwart von gegenüber der Cyclocarbonatgruppe inerten Lösungsmitteln stellt eine bevorzugte Verfahrensvariante dar. Bei der stöchiometrischen Bewertung der Ausgangsprodukte sowie auch der Endprodukte und zur Reaktionskontrolle können die Aminzahl (Titration mit Perchlorsäure) und die Cyclocarbonat-Äquivalenzzahl (Titration mit Kaliumhydroxidlösung) zugrunde gelegt werden. Bei der Umsetzung der Komponenten (a) und (b) können die Aminverbindungen einzeln oder als Gemische, gleichzeitig oder zeitlich hintereinander der Reaktion zugeführt werden, gegebenenfalls gelöst in inerten Lösemitteln.

Die Umsetzung wird unter Reaktions- und Verfahrensbedingungen durchgeführt, die so mild sind, daß die Cyclocarbonatgruppen der Komponente (a) nur mit den primären Aminogruppen der Komponente (b) reagieren, ohne daß auch entsprechende Reaktionen mit den eventuell vorhandenen sekundären Aminogruppen stattfinden, welche deutlich reaktionsträger sind. Es kann nach üblichen, dem Fachmann geläufigen Methoden gearbeitet werden. Die Reaktionstemperaturen sollten so niedrig wie möglich sein, um auch zu vermeiden, daß aus Urethanstrukturen von Polyalkylenpolyaminen cyclische Harnstoffderivate entstehen.

Als inerte Lösemittel kommen z.B. aromatische Kohlenwasserstoffe wie Xylol und Toluol, Alkohole wie Methanol, Ethanol, Butanole, Pentanole, 1,2-Propandiol, Ethylenglykol und Glykolether wie Methoxyethanol, Ethoxyethanol, Methoxypropanol, Butoxyethanol, Methoxybutanol, Glykoldimethylether und Diglykoldimethylether in Frage. Bevorzugt werden solche Lösungsmittel gewählt, welche sich nach erfolgter Reaktion leicht abdestillieren lassen oder später in der wäßrigen Formulierung nicht stören. Die Lösemittel werden im letzteren Falle bevorzugt lediglich in einer Menge verwendet, die zur Erniedrigung der Viskosität auf ein handhabbares Maß ausreicht. Ester und Ketone sind aufgrund ihrer potentiellen Reaktivität gegenüber den Komponenten nur bedingt geeignet.

Die Reaktionstemperatur bei der Umsetzung der Komponenten a1) und a2) liegt beispielsweise im Bereich von 50°C bis 150°C, nach unten beschränkt durch Löslichkeit und Viskosität, nach oben durch Neigung zu Neben- und Folgereaktionen sowie Siedepunkt des Lösemittels. Bevorzugt arbeitet man zwischen 80°C und 130°C. Katalysatoren werden für diese Umsetzung nicht benötigt. So laufen Reaktionen zwischen Carbonaten und primären Aminen schon bei Raumtemperatur zügig ab; es können aber höhere Temperatur günstig sein, wenn die Produkte selbst in Lösemitteln eine hohe Viskosität aufweisen.

Die Mengenverhältnisse (a) : (b) werden so gewählt, daß aminofunktionelle Reaktionsprodukte (A) gebildet werden, welche über diese Funktionen zur Reaktion mit den Epoxidgruppen, z.B. den Glycidylgruppen, der Epoxidharze (B) befähigt sind. Vorzugsweise sollen im Reaktionsprodukt mindestens eine primäre, bevorzugt mehrere primäre Aminogruppen pro Molekül vorliegen. Durch Variation der Mengenverhältnisse lassen sich Produkte von oligomerem bis hin zu polymerem Charakter gewinnen, wobei Oligomere besonders bevorzugt sind. Somit werden bevorzugt die Mengenverhältnisse von cyclischem Carbonat (a) und Polyamin (b) so gewählt, daß das Verhältnis der Anzahl der cyclischen Carbonatgruppen zur Anzahl der primären Aminogruppen von 1,0:5,0 bis 1,0:1,5 für die Bildung von Oligomeren liegt.

Zur Herstellung der wasserverdünnbaren Epoxidverbindungen (B) geeignete Komponenten c) sind Polyalkylenpolyether mit endständiger sekundärer oder primärer Aminogruppe und endständiger Alkyl- oder Arylethergruppe und/oder Polyalkylenpolyether mit zwei endständigen sekundären oder primären Aminogruppen. Die Polyalkylenpolyetheramine haben bevorzugt eine gewichtsmittlere Molmasse (Mw) von 200 bis 20000. Die Basis der Polyalkylenpolyethereinheiten können beispielsweise Ethyl-, Propyl- und Butyleinheiten sein. Es kann sich hierbei beispielsweise um Reaktionsprodukte von Ethylenoxid, Propylenoxid, Butylenoxid bzw. Amylenoxid mit einwertigen und/oder mehrwertigen Alkoholen oder um Polyether auf der Basis von Tetrahydrofuran handeln. Bevorzugt sind Polyalkylenpolyetheramine auf Basis von Ethylenoxid oder Propylenoxid. Besonders bevorzugt sind Polyalkylenpolyethermonoamine.

Beispielsweise können als Komponente c) solche Produkte eingesetzt werden, wie sie unter dem Handelsnamen Jeffamine von der Firma Huntsman Corporation Belgium N.V. vertrieben werden.

Zur Herstellung der wasserverdünnbaren Epoxidverbindungen (B) geeignete Polyepoxidverbindungen d) sind beispielsweise solche, wie sie vorstehend zur Herstellung der cyclischen Carbonate (a) beschrieben wurden. Aus der großen Zahl einsetzbarer polyfunktioneller Epoxidverbindungen seien beispielhaft genannt: die Epoxide mehrfach ungesättigter Kohlenwasserstoffe (z.B. Vinylcyclohexan, Dicyclopentadien, Cyclohexadien, Butadien), Epoxidether mehrwertiger Alkohole (z.B. Ethylen-, Propylen-, Butylenglykole, Glycerin, Pentaerythrit, Sorbit, Polyvinylalkohol), Epoxidether mehrwertiger Phenole (z.B. Resorcin, Hydrochinon, Bis-(4-hydroxyphenyl)-methan, Bis-(4-hydroxy-3-methylphenyl)-methan, Bis-(4-hydroxy-3,5-dibromphenyl)-methan, 1,1-Bis-(4-hydroxyphenyl)-ethan, 2,2-Bis-(4-hydroxy-3-methylphenyl)-propan, 2,2-Bis-(4-hydroxy-3-chlorphenyl)-propan, 2,2-Bis-(4-hydroxy-3,5-dichlorphenyl)-propan, 1,1-Bis-(4-hydroxyphenyl)-cyclohexan, Bis-(4-hydroxyphenyl)-cyclohexylmethan, sowie Epoxide, welche nach üblichen Verfahren aus mehrfach ungesättigten Carbonsäuren oder einfach ungesättigten Carbonsäureestern ungesättigter Alkohole hergestellt worden sind.

Bevorzugt eingesetzte Epoxidverbindungen sind Polyphenol-Glycidylether, z.B. die Reaktionsprodukte aus Epichlorhydrin und Bisphenol A oder Bisphenol F. Derartige Epoxidharze haben ein Epoxidäquivalentgewicht von 160 bis 500. Es können auch Gemische von Epoxidverbindungen eingesetzt werden.

Als Komponente (C) können Aminverbindungen, bevorzugt Polyamine, eingesetzt werden, die mindestens eine primäre und gegebenenfalls noch sekundäre oder tertiäre Aminogruppen enthalten. Geeignet sind beispielsweise sämtliche Amine wie sie vorstehend für Komponente b) genannt wurden.

Die Aminourethane (A) werden für sich allein oder gegebenenfalls in Abmischung mit weiteren Aminen (C) mit den wasserverdünnbaren Epoxidharzen (B) umgesetzt; wobei das Verhältnis der Anzahl der primären Aminogruppen von Komponente (A) zu der Anzahl der primären Aminogruppen von Komponente (C) bevorzugt 20 : 1 bis 1 : 20 und das Verhältnis der Anzahl der primären Aminogruppen aus (A) und (C) zu der Anzahl der Epoxidgruppen in (B) bevorzugt 2 : 1 bis 20 : 1, besonders bevorzugt 2 : 1 bis 5 : 1 beträgt.

Die Herstellung der erfindungsgemäßen Epoxid-Aminourethan-Addukte unterliegt keinen besonderen Regeln. Besonders bevorzugt sind die folgenden Varianten:

(I) Ein Polyol wird vorgelegt und mit Kohlensäurediester zum Cyclocarbonat (a) umgesetzt. Nun erfolgt die Weiterreaktion mit einer ersten Menge einer Aminverbindung (b), welche gegebenenfalls im Überschuß eingesetzt wird, in beschriebener Weise zum Aminourethan (A), wobei gegebenenfalls inerte Lösemittel zugegeben sind. Hierauf folgt gegebenenfalls die Zugabe einer zweiten Menge von Komponente (b), welche in ihrer Zusammensetzung gleich oder verschieden zur ersten Menge an Komponente (b) sein kann. Das Produkt, welches ausschließlich aus Aminourethan (A) oder gegebenenfalls aus einem Gemisch von (A) und überschüssigen Aminen besteht, wird nun mit dem hydrophilen Epoxidharz (B) umgesetzt. Dabei muß gewährleistet werden, daß genügend freie Aminogruppen verbleiben, welche zur Härtung dienen.

(II) Isolierte Aminourethane (A) werden zusammen mit Aminen gemäß (b) und gegebenenfalls geeigneten inerten Lösemitteln homogenisiert und mit einem Unterschuß an hydrophilem Epoxidharz (B) derart umgesetzt, daß für die Härtung ausreichend viele freie Aminogruppen übrig bleiben.

(III) Das hydrophile Epoxidharz (B) wird mit einem Überschuß an Polyaminen (b) umgesetzt und das mit nicht reagierten Aminen gemischte Epoxid-Amin-Addukt mit Carbonatverbindungen gemäß (a) wie beschrieben derart umgesetzt, daß genügend freie Aminogruppen für die Härtung verbleiben.

Die nach den verschiedenen Verfahren erhaltenen Epoxid-Aminourethan-Addukte können nach Bedarf mit wasserverdünnbaren Lösemitteln versetzt werden.

Die Epoxid-Aminourethan-Addukte (Umsetzungsprodukte aus A), B) und gegebenenfalls C)) können als Härter für wäßrige Epoxidharzsysteme eingesetzt werden. Sie können als alleinige Härter oder im Gemisch mit weiteren Aminhärtern verwendet werden.

Die Erfindung betrifft weiterhin wäßrige Überzugsmittel, insbesondere zweikomponentige Überzugsmittel auf Basis der erfindungsgemäßen Epoxid-Aminourethan-Addukte, gegebenenfalls weiteren Aminhärtern und auf Basis einer Epoxidharzkomponente. Bei den zweikomponentigen Überzugsmitteln werden die Epoxidharzkomponente und die Aminourethan- und gegebenenfalls verbundene Amin-Komponente getrennt gelagert und vor der Anwendung gemischt.

Beispiele für weitere Aminhärter sind alle unter (b) genannten Amine, bevorzugt Polyamine, Epoxid-Amin-Addukte, Mannichbasen und Polyamidoamine, welche allein oder als Gemische verwendet werden können. Geeignete Mannich-Basen werden durch Kondensation von Polyaminen, vorzugsweise Diethylentriamin, Triethylentetramin, Isophorondiamin, 2,2,4- bzw. 2,4,4-Trimethylhexamethylendiamin, 1,3-und 1,4-Bis-(aminomethyl)-cyclohexan, insbesondere meta- und para-Xylylendiamin mit Aldehyden, vorzugsweise Formaldehyd und ein- oder mehrwertigen Phenolen mit mindestens einer gegenüber Aldehyden reaktiven Kernposition, beispielsweise den verschiedenen Kresolen und Xylenolen, para-tert.-Butylphenol, Resorcin, 4,4'-Dihydroxydiphenylmethan, 2,2-Bis(4'-hydroxyphenyl)-propan, vorzugsweise aber Phenol hergestellt. Polyamidoamine, die zur Härtung der erfindungsgemäßen Epoxidharzdispersionen verwendet werden können, werden beispielsweise durch Umsetzung von Polyaminen mit Mono- oder Polycarbonsäuren, z.B. dimerisierten Fettsäuren, erhalten. Bevorzugt werden als Aminhärter neben den oben genannten Systemen wasserlösliche Polyoxyalkylendi- und -polyamine sowie leicht in Wasser dispergierbare Härtungsmittel, wie sie z.B. in EP-A-0 000 605 beschrieben sind, eingesetzt.

Als Epoxidharzkomponente für die Formulierung von zweikomponentigen Bindemittelsystemen auf Grundlage der erfindungsgemäßen Aminhärter kommen die bekannten wäßrigen Bindemittelsysteme auf Epoxidharzbasis in Betracht. Bei den Epoxidharzen kann es sich beispielsweise um solche Epoxidverbindungen handeln, wie sie für Komponente d) beschrieben wurden. Bevorzugt werden modifizierte nicht-ionisch stabilisierte Epoxidharze eingesetzt; Beispiele für derartige verwendbare Epoxidharze sind in der DE-A-36 43 751 beschrieben. Weiterhin ist der Einsatz üblicher Epoxidharze, wie sie dem Fachmann für wäßrige zweikomponentige Epoxid/Amin-Systeme geläufig sind, möglich. Das können z.B. handelsübliche Di- oder Polyepoxide sein. Das sind filmbildende Epoxidharze, die als wäßrige Dispersion oder als wasserverdünnbares Harz vorliegen. Beispiele für solche Polyepoxide sind Polyglycidylether auf Basis von aliphatischen oder aromatischen Diolen wie Bisphenol A, Bisphenol F oder Polyalkylenglykol.

Die erfindungsgemäßen Überzugsmittel können übliche Pigmente und Füllstoffe, z.B. Titandioxid, Bariumsulfat, Aluminiumsilikat, Siliciumdioxid, Zinkphosphat, Ruß, farbgebende und/oder transparente organische oder anorganische Pigmente, sowie übliche lacklübliche Additive enthalten. Beispiele für letztere sind Antikratermittel, Antischaummittel, Verlaufsmittel, Katalysatoren, Haftvermittler. Es können auch organische Lösemittel, bevorzugt wassermischbare Lösemittel, im Überzugsmittel vorhanden sein. Deren Anteil soll bevorzugt unter 10 Gew.-% betragen. Die Pigmente, Füllstoffe und Additive werden in üblichen, dem Fachmann geläufigen Mengen, zugesetzt.

Die Pigmente und/oder Füllstoffe können entweder in der Epoxidharzkomponente oder in der Aminkomponente dispergiert werden. Bevorzugt ist die Dispergierung in der Aminkomponente.

Bei den erfindungsgemäßen Überzugsmitteln handelt es sich um zweikomponentige Überzugsmittel, d.h. die Epoxid- und die Aminkomponente werden getrennt voneinander gelagert und erst vor der Applikation miteinander vermischt. Das Äquivalentverhältnis, also das Verhältnis der Anzahl der primären Aminogruppen zur Anzahl der Epoxidgruppen, beträgt dabei 5 : 1 bis 1 : 5, bevorzugt 1,5 : 1 bis 1 : 1,5.

Die erfindungsgemäßen Überzugsmittel sind besonders geeignet zur Herstellung von Füller- und/oder Grundierungsschichten eines lufttrocknenden oder forciert-trocknenden Mehrschichtüberzuges. Sie können jedoch auch bei höheren Temperaturen von z.B. 80 bis 140°C gehärtet werden. Bevorzugt sind jedoch Temperaturen unter 80°C. Sie eignen sich für die Fahrzeug- und Industrielackierung, insbesondere für die Reparaturlackierung von Fahrzeugen und Fahrzeugteilen.

Die Überzugsmittel können nach bekannten Verfahren, wie z.B. Spritzen, Tauchen, Rollen oder Rakeln, appliziert werden. Sie können auf ein gegebenenfalls vorbehandeltes Substrat als solches oder auf übliche Grundierungen aufgebracht werden. Sie haften gut auf den verschiedensten Untergründen, wie z.B. blankes Stahlblech, geschliffen, Polyvinylbutyralprimer, 2K-Epoxid-Grundierungen, angeschliffene Werksoder Altlackierungen. Nach dem Trocknen und Schleifen können die erfindungsgemäßen Überzugsmittel problemlos mit üblichen Decklacken überlackiert werden. Dabei kann es sich um Einschichtdecklacke, z.B. auf 2K-Acrylat/Polyisocyanat-Basis oder um übliche Basecoat/Clearcoat-Aufbauten handeln. Es kann mit lösemittelbasierenden oder wasserverdünnbaren Überzugsmitteln überlackiert werden. Die erfindungsgemäßen Überzugsmittel können beispielsweise bei Raumtemperatur getrocknet werden oder nach einer Ablüftzeit von 10 bis 30 Minuten einer Trocknung während 30 bis 50 Minuten bei 60°C unterzogen werden.

Nach dem Vernetzen erhält man homogen beschichtete Substrate mit glatten störungsfreien Oberflächen. Die Überzüge zeigen keine Nadelstiche. Die erfindungsgemäßen Überzugsmittel zeigen im Vergleich zu bekannten wäßrigen Epoxid/Polyamin-Systemen eine deutliche Verminderung der Thermoplastizität, was zu einer erheblichen Verbesserung der Schleifbarkeit führt. Schon nach kurzer Trockenzeit sind die Überzüge problemlos naß und trocken schleifbar. Das gilt auch für höhere Schichtdicken. Die Überzugsmittel zeigen eine ausreichende Verarbeitungszeit von mindestens 120 Minuten und eine hohe Standfestigkeit (Ablaufsicherheit) an senkrechten Flächen.

Die Erfindung betrifft auch Verfahren zur Herstellung von Mehrschichtüberzügen bzw. die Verwendung der Überzugsmittel zur Herstellung von Mehrschichtüberzügen, wobei insbesondere die Füllerund/oder Grundierungsschichten von Mehrschichtüberzügen durch die erfindungsgemäßen Überzugsmittel erstellt werden.

Die folgenden Beispiele sollen die Erfindung erläutern, aber nicht einschränken. Folgende Abkürzungen werden verwendet.

| Abk. für Amine | |
|---|---|
| MPDA | 2-Methyl-1,5-pentandiamin (1) |

(fortgesetzt)

| Abk. für Amine | |
|---|---|
| mXDA | meta-Xylylendiamin (2) |
| TMD | 2,2,4-(2,4,4)-Trimethyl-1,6-hexandiamin (3) |
| Deta | Diäthylendiamin (4) |
| TCD-DA | Tricyclodecandiamin (5) |
| IPDA | Isophorondiamin (3) |
| Abk. für Epoxidharze und deren Carbonate | |
| EP 140 | Beckopox EP 140 (6) (flüssiges 100 % Epoxidharz) |
| EP 116 | Beckopox EP 116 (6) (flüssiges 100 % Epoxidharz) |
| Epk 155 | Epikote 155 (7) (handelsübliches Epoxidharz) |
| DG | Diglycerindicarbonat |
| BA | Dicarbonat des Beckopox EP 140 |
| HD | Dicarbonat des RV 1812 (8) |
| Abk. für weitere Begriffe | |
| EV | Epoxidäquivalentgewicht (g/val) |
| AZ | Aminzahl (mg KOH/g) |
| Tg | Glastemperatur |
| η | Viskosität |

1. Allgemeine Beschreibung zur Herstellung von Carbonaten (Komponente a) aus Epoxiden - Methode A

1,0 val Epoxidverbindung werden in einer 70 %igen Lösung aus Methoxypropanol mit 0,2 Gew.-% Kaliumiodid und 0,2 Gew.-% Triphenylphosphan bis zum Sieden erhitzt. In die Lösung leitet man gasförmiges Kohlendioxid bei 1 bar Druck ein, bis ein Umsatz von 97 %, gemessen der Zunahme des Epoxidäquivalentes, überschritten wird. Das Einleiten von Kohlendioxid wird abgebrochen und das Lösemittel im Vakuum (50 mbar, 130°C) abdestilliert.

2. Allgemeine Beschreibung zur Herstellung von Carbonaten (Komponente a) aus Epoxiden - Methode B

1,0 val einer 1,2- (oder 1,3-) Dihydroxyverbindung werden mit 1,2 mol Dimethylcarbonat und 0,5 Gew.-% Kaliumcarbonat unter Rückfluß erwärmt. Der Siedepunkt fällt dabei von 90°C (Siedepunkt des reinen Dimethylcarbonats) auf 64°C (Methanol). Nach 120°C Minuten Sieden bei 64°C wird überschüssiges Dimethylcarbonat und Methanol abdestilliert, zuletzt wird 60 Minuten ein Vakuum von 50 mbar bei einer Temperatur von 130°C gehalten.

3. Allgemeine Beschreibung zur Herstellung von Aminourethanen A) aus Carbonaten a) und Aminen b)

Das Amin oder die Aminmischung wird mit Lösemittel (wahlweise) vorgelegt und auf 70°C erwärmt. Bei dieser Temperatur wird vorsichtig das Carbonat, in einem Lösemittel gelöst (wahlweise), hinzugetropft (siehe Tabelle 6.1.). Die Zutropfgeschwindigkeit richtet sich nach der nun einsetzenden exothermen Reaktion, bei der die Temperatur 140°C nicht übersteigen darf (Kühlen und vermindern der Zutropfgeschwindigkeit). Nach dem Zutropfen wird auf 140°C gehalten, bis die Reaktion, gemessen an der Aminzahl, einen Umsatz von 90 % überschreitet. Nach dem Abkühlen auf 90°C wird mit deionisiertem Wasser auf eine 80 % wäßrige Lösung verdünnt.

4. Allgemeine Beschreibung zur Herstellung von Emulgatoren (Komponente B) auf Basis von Epoxidharzen d) und aminoterminierten Polyalkylenpolyethern c)

Die berechnete Menge an Epoxidharz (Art und Menge siehe Tabelle 6.2.) und aminoterminiertem Polyalkylenpolyether (bekannt unter dem Handelsnamen Jeffamine, von der Firma Huntsman Corporation Belgium N.V. (Belgien)) werden bei 120°C umgesetzt bis das berechnete Epoxidäquivalent erreicht wird. Dazu werden die Aminzahl und eine scheinbare Aminzahl (Titration mit und ohne Tetrabutylammoniumbromid) gemessen. Die Proben werden in Eisessig/Aceton (1 : 1 v/v) gelöst und mit 0,1 n Perchlorsäure, gelöst in Eisessig, titriert. Das Epoxidäquivalent (EV) wird nach folgender Formel gefunden:

$$EV = \frac{56.110}{AZ\ (mit) - AZ\ (ohne)}$$

wobei

AZ (mit) bedeutet:    Titration mit einem Überschuß an Tetrabutylammoniumbromid
AZ (ohne) bedeutet:   Titration ohne Tetrabutylammoniumbromid

4A) Herstellung eines Vergleichsemulgators E6
    Es wird ein Vergleichsemulgator aus Polyethylenglykol und einem Bisphenol A-Diglycidylether/Bisphenol F-Diglycidylether-Gemisch entsprechend EP-A-0 000 605, Beispiel 1A) hergestellt.

5. Allgemeine Beschreibung zur Herstellung der erfindungsgemäßen wäßrigen Härter
    Die in der Tabelle 6.3. angegebenen Mengen an monomerem Amin oder einer Mischung aus monomeren Aminen werden mit Aminourethan homogen bei 40°C vermischt. Im Temperaturbereich von 60 - 80°C setzt man vorsichtig die gewünschte Menge an epoxyfunktionellem Emulgator hinzu. Nach der Zugabe wird weiter in diesem Temperaturbereich gehalten. Durch Titration der Aminzahlen mit/ohne Tetrabutylammoniumbromid stellt man den Umsatz der Reaktion fest. Bei einer Differenz der Aminzahlen von ≤ 1 bricht man die Addition ab und verdünnt auf 80 % Lieferform mit deionisiertem Wasser. Damit ist der Epoxidhärter für seinen bestimmungsgemäßen Gebrauch fertiggestellt.

6. Tabellarische Übersicht einiger erfindungsgemäßer wäßriger Härter
    Die in den folgenden Tabellen angegebenen wäßrigen Härter und ihre Vorprodukte stellen eine Auswahl an allen möglichen erfindungsgemäßen Härtern dar.

6.1 Tabelle der Aminourethane

6.2 Tabelle der Emulgatoren

6.3 Tabelle der wäßrigen Härter

## Tabelle 6.1

### Tabelle der Aminourethane (Komponente A)

| Bez. | Amin 1 b) | Amin 2 b) | Carbonat a) | Methode | Verhältnis # | Amino- urethan AZ | $\eta$ mPa.s/25 °C | Tg |
|------|-----------|-----------|-------------|---------|--------------|-------------------|--------------------|-----|
| U1 | mXDA | TMD | DG | 2 | 2 : 1 : 2 | 164 | 2900 | 0 |
| U2 | mXDA | MPDA | DG | 2 | 2 : 1 : 2 | 166 | 2100 | 0 |
| U3 | mXDA | 0 | BA | 1 | 2 : 1 | 251 | 0 | 47°C |
| U4 | Deta | 0 | BA | 1 | 3 : 2 | 203 | 0 | 43°C |
| U5 | mXDA | 0 | HD | 1 | 3 : 2 | 112 | 8600 | 0 |

\# als Verhältnis wird angegeben die Äquivalente Aminogruppe des Amins 1 zu den Äquivalenten Aminogruppe des Amins 2 zu den Äquivalenten Carbonat.

EP 0 846 137 B1

Tabelle 6.2.

Tabelle der Emulgatoren (Komponente B)

| | d) Epoxidharz 1 | | d) Epoxidharz 2 | | c) Jeffamine | | | |
|---|---|---|---|---|---|---|---|---|

Kennzahlen des Emulgators

| Bez. | Typ | Einwaage | Typ | Einwaage | Typ | Einwaage | EV | mPa.s/25 °C |
|---|---|---|---|---|---|---|---|---|
| E1 | EP 140 | 603 g | 0 | 0 | M-2070 | 440 g | 355 | 7300 |
| E2 | EP 140 | 603 g | 0 | 0 | M-1000 | 440 g | 420 | 9900 |
| E3 | EP 140 | 550 g | 0 | 0 | M-2070 | 450 g | 379 | 7100 |
| E4 | EP 116 | 550 g | 0 | 0 | M-2070 | 450 g | 370 | 6900 |
| E5 | EP 116 | 400 g | Epk 155 | 200 g | M-2070 | 400 g | 330 | 21000 |
| E6 (Vergleich) | | | | | | | 379 | 9600 |

EP 0 846 137 B1

## Tabelle 6.3.

### Tabelle der wäßrigen Härter

Wäßriger Härter

| | C) Amin 1 | | C) Amin 2 | | A) Aminourethan | | B) Emulgaor | | | |
|---|---|---|---|---|---|---|---|---|---|---|
| Bez. | Typ | Einwaage | Typ | Einwaage | Typ | Einwaage | Typ | Einwaage | AZ | mPa.s/ 25°C |
| W1 | mXDA | 1020 g | IPDA | 1190 g | U1 | 1436 g | E1 | 3550 g | 217 | 16,1 |
| W2 | mXDA | 1007 g | TCD-DA | 1358 g | U2 | 1515 g | E2 | 4200 g | 273 | 15,4 |
| W3 | mXDA | 1010 g | IPDA | 1260 g | U3 | 963 g | E3 | 3790 g | 249 | 24,9 |
| W4 | mXDA | 997 g | TMD | 1110 g | U4 | 1100 g | E4 | 3700 g | 256 | 21,0 |
| W5 | mXDA | 1029 g | IPDA | 1150 g | U5 | 2005 g | E5 | 3300 g | 273 | 17,5 |
| W6 Vgl | mXDA | 1010 g | IPDA | 1260 g | U3 | 963 g | E6 | 3790 g | | |

EP 0 846 137 B1

7. Herstellung von Füllern

Aus den in Tabelle 6.3. angegebenen wäßrigen Härtern werden wäßrige 2K-Füller formuliert. Dazu werden jeweils 48,5 g der wäßrigen Härter W1 - W5 und des Vergleichshärters W6 mit 350 g VE-Wasser gut vermischt. Zu der Mischung werden 13 g eines handelsüblichen Polyurethanverdickers und 1,3 g eines Korrosionsinhibitors gegeben und ebenfalls gut vermischt. In dieser Mischung werden folgende Pigmente und Füllstoffe in üblicher Weise dispergiert:

| | |
|---|---|
| 32 g | Siliciumdioxid |
| 114 g | Bariumsulfat |
| 95 g | Aluminiumsilikat |
| 104 g | Titandioxid |
| 5 g | Eisenoxidgelb |

Zu den so erhaltenen Polyaminkomponenten werden kurz vor der Applikation folgende Mengen eines handelsüblichen wäßrigen Epoxidharzes (53 %ig, Beckopox EP 384 w der Fa. Hoechst AG) zugegeben und jeweils beide Komponenten intensiv durch Rühren vermischt:

| wäßriger Härter | Menge an Epoxidharz |
|---|---|
| W1 | 311 g |
| W2 | 391 g |
| W3 | 357 g |
| W4 | 367 g |
| W5 | 391 g |
| W6 (Vergleich) | 357 g |

Applikation der Überzugsmittel

Die Füller-Überzugsmittel (Füller 1-5, entsprechend den unterschiedlichen Härtern W1 - W5 und Vergleichsfüller W6) werden jeweils auf mit Kataphoresegrundierung vorbeschichtete Stahlsubstrate aufgespritzt und 60 Minuten bei 60°C getrocknet. Nach dem Trocknen und Schleifen werden die Füllerschichten jeweils mit einem üblichen lösemittelbasierenden 2K-Decklack (Basis Acrylat/Polyisocyanat) überlackiert. Die Füllerüberzugsmittel W1-W5 zeigen jeweils einen ausgezeichneten Verlauf. Die Oberflächenqualität ist sehr gut. Es sind keine Oberflächendefekte (Nadelstiche, Blasen) erkennbar, auch nicht nach Überlackieren mit dem Decklack. Die erhaltenen Füllerschichten sind trocken und naß bei Schichtdicken von 30 und 130 μm sehr gut schleifbar.
Zur Beurteilung der Schleifbarkeit wird als ein Kriterium der Materialabtrag herangezogen. Dazu wird mit einer handelsüblichen Exzenterschleifmaschine (mit 2 kg beschwert, Schleifpapier P 400, Durchmesser des Schleiftellers 20 cm) 30 Sekunden lang geschliffen und anschließend der Abtrag gravimetrisch bestimmt.
Der Vergleich der untersuchten Füller ist in der folgenden Tabelle dargestellt.

| Füller | Oberflächenqualität | Schleifbarkeit/Materialabtrag |
|---|---|---|
| 1 | sehr gut | 1,0 g |
| 2 | sehr gut | 1,2 g |
| 3 | sehr gut | 1,2 g |
| 4 | sehr gut | 1,0 g |
| 5 | sehr gut | 1,1 g |
| 6 (Vergleich) | gut | 0,4 g |

**Patentansprüche**

**1.** Aminourethan-Härter, geeignet für wäßrige Überzugsmittel auf Epoxidbasis, erhältlich durch Umsetzung von

A) einem oder mehreren Aminourethanen, die erhältlich sind durch Umsetzung von

a) Verbindungen mit mindestens einer 2-Oxo-1,3-dioxolan-Gruppe und/oder 2-Oxo-1,3-dioxan-Gruppe, im folgenden als cyclische Carbonatgruppe bezeichnet,
mit
b) einem oder mehreren Aminen mit mindestens einer primären Aminogruppe,
wobei das Verhältnis der Anzahl der cyclischen Carbonatgruppen zu der Anzahl der primären Aminogruppen 1 : 10 bis 1 : 1,1 beträgt,
mit

B) einer oder mehreren wasserverdünnbaren Epoxidverbindungen, die erhältlich sind durch Umsetzung von

c) einem oder mehreren Polyalkylenpolyethern mit einer primären und/oder sekundären $\alpha$-ständigen Aminogruppe und einer $\omega$-endständigen Alkylether- oder Arylethergruppe und/oder einem oder mehreren Polyalkylenpolyethern mit zwei primären und/oder sekundären $\alpha,\omega$-endständigen Aminogruppen, jeweils mit einer gewichtsmittleren Molmasse (Mw) von 200 bis 20000
mit
d) einer oder mehreren Epoxidverbindungen mit mindestens zwei Epoxidgruppen pro Molekül und einem Epoxidäquivalentgewicht von 100 bis 2000, wobei das Verhältnis der Anzahl der primären und/oder sekundären Aminogruppen der Komponente c) zu den Epoxidgruppen der Komponente d) 1 : 2 bis 1 : 20 beträgt und das Epoxidäquivalentgewicht der aus c) und d) erhaltenen Kondensationsprodukte zwischen 150 und 8000 liegt,
und

C) gegebenenfalls einem oder mehreren von A) unterschiedlichen Aminen mit mindestens einer primären Aminogruppe.

2. Aminourethan-Härter nach Anspruch 1, **dadurch gekennzeichnet, daß** die Amine b) und gegebenenfalls die Amine C) voneinander unabhängig ausgewählt sind aus den Gruppen

b1) primäre Diamine,
b2) Amine mit drei oder mehr primären Aminogruppen,
b3) primäre Diamine, die weitere sekundäre und/oder tertiäre Aminogruppen enthalten,
b4) Amine mit drei oder mehr primären Aminogruppen, die weitere sekundäre und/oder tertiäre Aminogruppen enthalten.

3. Aminourethan-Härter nach Anspruch 2, **dadurch gekennzeichnet, daß** die Amine b2) und gegebenenfalls die Amine (C) voneinander unabhängig ausgewählt sind aus der Gruppe der Polyalkylenpolyamine, der Polyoxyalkylenpolyamine, der Polyaminoalkylaromaten, der Cycloalkylenpolyamine und der Umsetzungsprodukte von Di- oder Polyaminen mit Verbindungen, die mindestens eine endständige Epoxygruppe aufweisen.

4. Aminourethan-Härter nach Anspruch 1, 2 oder 3, **dadurch gekennzeichnet, daß** die Verbindungen a) mit mindestens einer cyclischen Carbonatgruppe durch Umsetzung von Glycidylethern mehrwertiger Alkohole oder Phenole, deren Hydrierungsprodukten oder Novolaken mit Kohlendioxid erhältlich sind.

5. Aminourethan-Härter nach Anspruch 1, 2 oder 3, **dadurch gekennzeichnet, daß** die Verbindungen a) mit mindestens einer cyclischen Carbonatgruppe durch Umsetzung von mehrwertigen Alkoholen mit Kohlensäureestern erhältlich sind.

6. Aminourethan-Härter nach einem der Ansprüche 1 bis 4, **dadurch gekennzeichnet, daß** bei der Synthese der Aminourethane das Verhältnis der Anzahl der cyclischen Carbonatgruppen zu der Anzahl der primären Aminogruppen 1 : 5 bis 1 : 1,5 beträgt.

7. Verfahren zur Herstellung der Aminourethan-Härter nach einem der Ansprüche 1 bis 5, **dadurch gekennzeichnet, daß** ein oder mehrere Aminourethane (A), eventuell vorgemischt mit einem oder mehreren Aminen (C) mit einer oder mehreren Epoxidverbindungen (B) umgesetzt werden, wobei man ein Verhältnis der Anzahl der primären Aminogruppen aus (A) und (C) zu der Anzahl der Epoxidgruppen aus (B) von 2 : 1 bis 20 : 1 wählt, und wobei (A), (B) und (C) wie in einem der Ansprüche 1 bis 5 definiert sind.

**8.** Aminourethan-Härter nach einem der Ansprüche 1 bis 6, **dadurch gekennzeichnet, daß** die Aminourethane (A) in Abmischung mit weiteren Aminen (C) eingesetzt werden; und zwar in einem Verhältnis der Anzahl der primären Aminogruppen von (A) zur Anzahl der primären Aminogruppen in (C) von 20 : 1 bis 1 : 20.

**9.** Verfahren nach Anspruch 7, **dadurch gekennzeichnet, daß** die Aminourethane (A) in Abmischung mit weiteren Aminen (C) eingesetzt werden; und zwar in einem Verhältnis der Anzahl der primären Aminogruppen von (A) zur Anzahl der primären Aminogruppen in (C) von 20 : 1 bis 1 : 20.

**10.** Wäßrige Überzugsmittel, enthaltend

- ein oder mehrere Epoxidharze,
- einen oder mehrere Aminourethan-Härter gemäß einem der Ansprüche 1 bis 6 und 8,
- gegebenenfalls einen oder mehrere von dem Aminourethan-Härter unterschiedliche Aminhärter und
- gegebenenfalls Pigmente, Füllstoffe, ein oder mehrere organische Lösemittel, Wasser und/oder übliche Additive.

**11.** Verfahren zur Herstellung von Mehrschichtüberzügen durch Auftrag einer Grundierungsschicht und gegebenenfalls einer Füllerschicht auf ein zu lackierendes Substrat und gegebenenfalls Auftrag einer oder mehrerer weiterer Überzugsmittelschichten, **dadurch gekennzeichnet, daß** als Grundierungsschicht und/oder Füllerschicht eine Schicht aus einem Überzugsmittel gemäß Anspruch 10 aufgetragen wird.

**12.** Verwendung der Aminourethan-Härter nach einem der Ansprüche 1 bis 6 und 8 als Härter für wäßrige Epoxidharzsysteme.

**13.** Verwendung der Aminourethan-Härter gemäß einem der Ansprüche 1 bis 6 und 8 in wäßrigen Überzugsmitteln auf Epoxidbasis.

**14.** Verwendung der Überzugsmittel nach Anspruch 10 zur Herstellung von Mehrschichtlackierungen.

**15.** Verwendung der Überzugsmittel nach Anspruch 10 zur Herstellung von Mehrschichtlackierungen in der Fahrzeug- und Fahrzeugteilelackierung.

**Claims**

**1.** Aminourethane curing agents suitable for aqueous epoxide-based coating agents,
obtainable by reaction of

A) one or more aminourethanes that are obtainable by reaction of

a) compounds with at least one 2-oxo-1,3-dioxolane group and/or 2-oxo-1,3-dioxan group, designated in the following as a cyclic carbonate group,
with
b) one or more amines with at least one primary amino group,
the ratio of the number of cyclic carbonate groups to the number of primary amino groups amounting to 1 : 10 to 1 : 1.1,
with

B) one or more water-dilutable epoxide compounds that are obtainable by reaction of

c) one or more polyalkylene polyethers with a primary and/or secondary $\alpha$-amino group and an $\omega$-terminal alkyl ether group or aryl ether group and/or one or more polyalkylene polyethers with two primary and/or secondary $\alpha,\omega$-terminal amino groups, in each case with a weight-average molar mass (Mw) from 200 to 20,000
with
d) one or more epoxide compounds with at least two epoxide groups per molecule and with an epoxy equivalent weight from 100 to 2000, the ratio of the number of primary and/or secondary amino groups of component c) to the epoxide groups of component d) amounting to 1 : 2 to 1 : 20 and the epoxy equivalent weight of the condensation products obtained from c) and d) being between 150 and 8000, and

C) optionally one or more amines differing from A) with at least one primary amino group.

2. Aminourethane curing agents according to claim 1, **characterised in that** the amines b) and optionally the amines C) are selected independently of one another from the following groups:

b1) primary diamines,
b2) amines with three or more primary amino groups,
b3) primary diamines that contain further secondary and/or tertiary amino groups,
b4) amines with three or more primary amino groups that contain further secondary and/or tertiary amino groups.

3. Aminourethane curing agents according to claim 2, **characterised in that** the amines b2) and optionally the amines C) are selected independently of one another from the group comprising the polyalkylene polyamines, the polyoxyalkylene polyamines, the polyaminoalkyl aromatics, the cycloalkylene polyamines and the conversion products of diamines or polyamines with compounds that comprise at least one terminal epoxide group.

4. Aminourethane curing agents according to claim 1, 2 or 3, **characterised in that** the compounds a) with at least one cyclic carbonate group are obtainable by reaction of glycidyl ethers of polybasic alcohols or phenols, the hydrogenation products or novolak resins of which are obtainable with carbon dioxide.

5. Aminourethane curing agents according to claim 1, 2 or 3, **characterised in that** the compounds a) with at least one cyclic carbonate group are obtainable by reaction of polybasic alcohols with carbonic esters.

6. Aminourethane curing agents according to claims 1 to 4, **characterised in that** in the course of synthesis of the aminourethanes the ratio of the number of cyclic carbonate groups to the number of primary amino groups amounts to 1 : 5 to 1 : 1.5.

7. A process for producing the aminourethane curing agents according to one of claims 1 to 5, **characterised in that** one or more aminourethanes (A), possibly premixed with one or more amines (C), are caused to react with one or more epoxide compounds (B), a ratio of the number of primary amino groups from (A) and (C) to the number of epoxide groups from (B) being chosen from 2 : 1 to 20 : 1, and (A), (B), and (C) being defined as in one of Claims 1 to 5.

8. Aminourethane curing agents according to claims 1 to 6, **characterised in that** the aminourethanes (A) are employed in a blend with further amines (C), to be specific in a ratio of the number of primary amino groups of (A) to the number of primary amino groups in (C) from 20 : 1 to 1 : 20.

9. Process according to claim 7, **characterised in that** the aminourethanes (A) are employed in a blend with further amines (C), to be specific in a ratio of the number of primary amino groups of (A) to the number of primary amino groups in (C) from 20 : 1 to 1 : 20.

10. Aqueous coating agents containing

- one or more epoxy resins,
- one or more aminourethane curing agents according to one of claims 1 to 6 and 8,
- optionally one or more amine curing agents differing from the aminourethane curing agents and
- optionally pigments, fillers, one or more organic solvents, water and/or conventional additives.

11. A process for producing multi-layer coatings by application of a primer layer and optionally a filler layer onto a substrate to be lacquered and optionally by application of one or more further coating-agent layers, **characterised in that** a layer of a coating agent according to claim 10 is applied by way of primer layer and/or filler layer.

12. Use of the aminourethane curing agents according to one of claims 1 to 6 and 8 as curing agents for aqueous epoxy-resin systems.

**13.** Use of the aminourethane curing agents according to one of claims 1 to 6 and 8 in aqueous epoxide-based coating agents.

**14.** Use of the coating agents according to claim 10 for producing multi-layer lacquer coatings.

**15.** Use of the coating agents according to claim 10 for producing multi-layer lacquer coatings in the lacquering of vehicles and vehicle parts.

**Revendications**

**1.** Durcisseurs d'amino-uréthane, appropriés aux agents de revêtement aqueux à base d'époxyde, pouvant être obtenus par la réaction

   A) d'un ou de plusieurs amino-uréthanes, que l'on peut obtenir par réaction

      a) de composés dotés d'au moins un groupe 2-oxo-1,3-dioxolane et/ou un groupe 2-oxo-1,3-dioxane, désignés dans ce qui suit groupe carbonate cyclique,
         avec
      b) une ou plusieurs amines dotées d'au moins un groupe amino primaire,
         le rapport du nombre des groupes carbonate cyclique sur le nombre des groupes amino primaires étant de 1 : 10 à 1 : 1,1,
         avec

   B) un ou plusieurs composés époxydes diluables dans l'eau, que l'on peut obtenir par réaction

      c) d'un ou de plusieurs polyalkylène polyéthers dotés d'un groupe amino primaire et/ou secondaire à terminaison $\alpha$ et un groupe alkyléther ou aryléther à fin de terminaison $\omega$ et/ou un ou plusieurs polyalkylène polyéthers dotés de deux groupes amino primaires et/ou secondaires à fin de terminaison $\alpha,\omega$, respectivement d'une masse molaire moyenne pondérée (Mw) allant de 200 à 2000,
         avec
      d) un ou plusieurs composés époxyde dotés au moins de deux groupes époxyde par molécule et d'un poids équivalent en époxyde allant de 100 à 2000, le rapport du nombre des groupes amino primaires et/ou secondaires des composants c) sur les groupes époxydes des composants d) étant de 1 : 2 à 1 : 20 et le poids équivalent en époxyde des produits de condensation obtenus à partir de c) et d) se situant entre 150 et 8000,
         et

   C) éventuellement une ou plusieurs amines différentes de A) dotées d'au moins un groupe amino primaire.

**2.** Durcisseurs d'amino-uréthane selon la revendication 1, **caractérisés en ce que** les amines b) et éventuellement les amines C) sont choisies indépendamment les unes des autres parmi les groupes des

   b1) diamines primaires,
   b2) amines dotées de trois groupes amino primaires ou plus,
   b3) diamines primaires contenant d'autres groupes amino secondaires et/ou tertiaires,
   b4) amines dotées de trois groupes amino primaires ou plus, contenant d'autres groupes amino secondaires et/ou tertiaires.

**3.** Durcisseurs d'amino-uréthane selon la revendication 2, **caractérisés en ce que** les amines b2) et éventuellement les amines (C) sont choisies indépendamment les unes des autres parmi le groupe des polyalkylène polyamines, polyoxyalkylène polyamines, des aromates polyaminoalkyle, des cycloalkylène polyamines et des produits de conversion des di- et polyamines avec des composés présentant au moins un groupe époxy en fin de terminaison.

**4.** Durcisseurs d'amino-uréthane selon la revendication 1, 2 ou 3, **caractérisés en ce que** les composés a) dotés au moins d'un groupe carbonate cyclique peuvent être obtenus par réaction des éthers glycidyle d'alcools polyvalents ou de phénols, leurs produits d'hydratation ou novolaques avec le dioxyde de carbone.

5. Durcisseurs d'amino-uréthane selon la revendication 1, 2 ou 3, **caractérisés en ce que** les composés a) dotés au moins d'un groupe carbonate cyclique peuvent être obtenus par réaction d'alcools polyvalents avec des esters d'acide carboxylique.

6. Durcisseurs d'amino-uréthane selon l'une des revendications 1 à 4, **caractérisés en ce que**, lors de la synthèse de l'amino-uréthane, le rapport du nombre des groupes carbonates cycliques sur le rapport des groupes amino primaires est de 1 : 5 à 1 : 1,5.

7. Procédé de fabrication des durcisseurs d'amino-uréthane selon l'une des revendications 1 à 5, **caractérisé en ce qu'**un ou plusieurs amino-uréthanes (A), éventuellement prémélangés avec une ou plusieurs amines (C), sont convertis avec un ou plusieurs composés époxyde (B), le rapport du nombre de groupes amino primaires issus de (A) et (C) sur le nombre des groupes époxyde issus de (B) étant choisi de 2 :1 à 20 :1 et (A), (B) et (C) étant définis tels que dans l'une des revendications 1 à 5.

8. Durcisseurs d'amino-uréthane selon l'une des revendications 1 à 6, **caractérisés en ce que** les amino-uréthanes (A) sont mis en oeuvre en mélange avec d'autres amines (C) et ce, en un rapport du nombre de groupes amino primaires (A) sur le nombre de groupes amino primaires dans (C) de 20 :1 à 1 :20.

9. Procédé selon la revendication 7, **caractérisé en ce que** les amino-uréthanes (A) sont mis en oeuvre en mélange avec d'autres amines (C) et ce, en un rapport du nombre de groupes amino primaires (A) sur le nombre de groupes amino primaires dans (C) de 20 :1 à 1 :20.

10. Agents de revêtement aqueux, contenant

   - une ou plusieurs résines époxyde,
   - un ou plusieurs durcisseurs d'amino-uréthane selon l'une des revendications 1 à 6 et 8,
   - éventuellement un ou plusieurs durcisseurs aminés différents des durcisseurs d'amino-uréthane et
   - éventuellement des pigments, charges, un ou plusieurs solvants organiques, de l'eau et/ou des additifs courants.

11. Procédé de fabrication de revêtements multicouches par application d'une couche d'apprêt et éventuellement d'une couche de charge sur un substrat à laquer et éventuellement application d'une ou de plusieurs autres couches d'agents de revêtement, **caractérisé en ce que** l'on applique comme couche d'apprêt et/ou couche de charge une couche provenant d'un agent de revêtement selon la revendication 10.

12. Utilisation des durcisseurs d'amino-uréthane selon l'une des revendications 1 à 6 et 8 comme durcisseurs pour les systèmes de résine époxyde aqueux.

13. Utilisation des durcisseurs d'amino-uréthane selon l'une des revendications 1 à 6 et 8 comme agents de revêtement aqueux à base d'époxyde.

14. Utilisation des agents de revêtement selon la revendication 10 pour la fabrication de laquages multicouches.

15. Utilisation des agents de revêtement selon la revendication 10 pour la production de laquages multicouches dans le laquage de véhicules et de pièces de véhicules.